(19) Europäisches Patentamt
European Patent Office
Office européen des brevets

(11) Publication number: 0 240 622 B1

# (12) EUROPEAN PATENT SPECIFICATION

(45) Date of publication of the patent specification: 06.09.89

(51) Int. Cl.⁴: D06M 13/26, C07F 9/09, C07C 87/30, C07C 93/04, C07C 103/54

(21) Application number: 86301747.1

(22) Date of filing: 11.03.86

(54) **Antistatic agents for synthetic fibers and methods for producing such agents.**

(43) Date of publication of application:
14.10.87 Bulletin 87/42

(45) Publication of the grant of the patent:
06.09.89 Bulletin 89/36

(84) Designated Contracting States:
DE GB IT

(56) References cited:
EP-A- 0 001 620
DE-A- 2 505 189
FR-A- 2 372 926
JP-B-45 000 573
SU-A- 1 122 663
US-A- 2 974 066

CHEMICAL ABSTRACTS, vol. 82, no. 20, 19th May 1975, page 71, abstract no. 126545t, Columbus, Ohio, US; & JP-A-74 26 112 (TAKEMOTO OIL AND FAT CO. LTD.) 05-07-1974

(73) Proprietor: Takemoto Yushi Kabushiki Kaisha, 2-5, Minato-machi, Gamagouri-shi Aichi-ken(JP)

(72) Inventor: Saiki, Masatsugu, 44-4 Aza-Hishida Fukuoka-cho, Okazaki-shi Aichi-ken(JP)
Inventor: Imai, Yoshio, 122-3 Kamimukaiyama Otsuka-cho, Gamagouri-shi Aichi-ken(JP)
Inventor: Takagi, Makoto, 2-5 Minato-machi, Gamagouri-shi Aichi-ken(JP)

(74) Representative: Clifford, Frederick Alan et al, MARKS & CLERK 57/60 Lincoln's Inn Fields, London WC2A 3LS(GB)

EP 0 240 622 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to antistatic agents for synthetic fibers and to methods of producing such agents.

In general, static electricity presents problems with the manufacture and use of synthetic fibers. The manufacturing processes for filament yarn and staple fiber, the spinning processes, the weaving processes and the finishing processes and also products made in these processes are all affected. Static electricity impedes operations and lowers the quality of products by dislevelling and wrapping and producing fluff. It gives electric shocks to operatives, causes the clothes to stick and attracts dust particles. It therefore makes it necessary to use an antistatic agent with synthetic fibers. Such an antistatic agent must be effective not only under conditions of high humidity but also when humidity is low.

In the production of synthetic fibers,serious problem arise from those finishing oils which fall off and become deposited on the machines during process stages. During spinning, for example, the fibers may be caused to wrap around a rubber draft roller. If such fibers become deposited on a guide or trumpet, these machine parts must be cleaned more frequently. If fibres become deposited on a heater during a spinning-drawing process, tar will be formed.If they become deposited on a guide during a warping process, they will generate fluff and cause yarn breakage.

As the processing speed is increased, the problems caused by this deposition become even more serious.Antistatic agents are commonly applied to overcome these problems. In practice such antistatic agents, as applied to synthetic fibers must not fall off or wear off at a significant rate.

The present invention relates to antistatic agents for synthetic fibers having this required characteristic, and to methods of producing such agents.

Many types of surface-active agents (cationic, anionic, non-ionic and amphoteric) are known to be suitable antistatic agents for synthetic fibers.

Alkyl phosphates have favourable antistatic properties under conditions of high and medium humidity, do not fall off significantly, do not turn yellow with heat and do not significantly rust. However, they are not as effective and desirable as antistatic agents in low-humidity situations.

Quaternary ammonium salts (such as trimethyl lauryl ammonium chloride, triethyl polyoxyethylene (3 mols) stearyl ammonium methosulfate, and tributyloctyl ammonium nitrate) have also been used as antistatic agents. They show favourable antistatic properties both at high humidity and at low humidity but they fall off,turn yellow with heat treatment and generate rust.

It now seems possible that the problems associated with such quaternary ammonium salts are caused by counteranions of the quaternary ammonium cations. If the counter anion is $Cl^-$, rusting becomes a serious problem. If it is $NO_3^-$ or $CH_3SO_4^-$, yellowing becomes serious.Quaternary ammonium salts with phosphate anions are known from Japanese Patent Tokko 45-573 and Tokkai 54-70223. These quaternary-ammonium lower-alkyl phosphates exhibit favourable antistatic properties both at high humidity and at low humidity and have the advantages of not significantly turning yellow with that and of not producing a significant amount of rust.They do, however, fall off the fibres significantly.

The present invention sets out to eliminate the aforementioned problems and provide antistatic agents for synthetic fibers which: are capable of exhibiting favourable antistatic properties under both high and low humidity conditions; do not fall off; do not turn unacceptably yellow with heat; and do not rust to an unacceptable extent.

The present invention further sets out to provide methods of producing such antistatic agents for synthetic fibers.

An antistatic agent for synthetic fibers according to this invention comprises as its principal constituent at least one quaternary ammonium alkyl phosphate of the formula (I) or (II) below together with no more than lwt%, with respect to the amount of ammonium alkali phosphate, of alkali metal halide by-product:

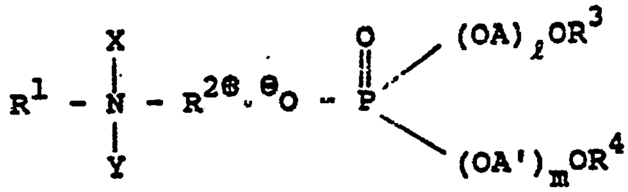

(I)

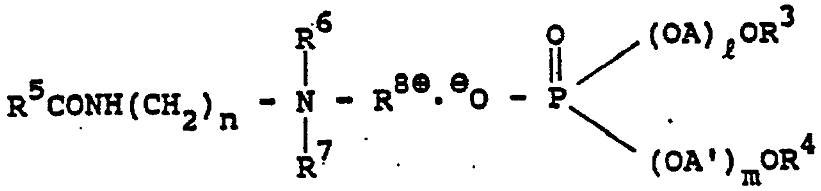

(II)

wherein:
$R^1$ and $R^3$ are the same or different alkyl groups or alkenyl groups in each case with from 8 to 18 carbon atoms;
$R^2$, $R^6$, $R^7$ and $R^8$ are the same or different alkyl groups within each case from 1 to 3 carbon atoms;
$R^4$ is hydrogen or an alkyl or alkenyl group with in each case from 8 to 18 carbon atoms;
$R^5$ is an alkyl or an alkenyl group with in each case 7 to 17 carbon atoms;
X is an alkyl group with from 1 to 3 carbon atoms or is a group of formula $-(A0)_qH$;
Y is an alkyl group with from 1 to 3 carbon atoms or is a group of formula - $(A'0)_rH$;
AO is equivalent to OA;
A'0 is equivalent to OA';
OA and OA' are in each case chosen from a single oxyethylene group,a single polypropylene group, or a chain of homopolymer, block copolymer on random copolymer type utilising as requisite one on both such groups;
q is an integer from 2 to 40;
r is an integer from 2 to 40;
q + r is an integer from 4 to 42;
l is zero or an integer from 1 to 20;
m is zero or an integer from 1 to 20;
l + m is zero or an integer from 1 to 20; and
n is 2 or 3.

In the formulas (I) and (II), if the number of carbon atoms in $R^1$ or $R^3$ were less than 8 or the number in $R^5$ were less than 7, the amount of deposit would increase.

If the content of byproduct alkali metal halides exceeds 1wt% with respect to the amount of quaternary ammonium alkyl phosphate, there is increased yellowing on heat treatment and increasing rusting. For this reason (and in particular for preventing rust) it is particularly preferable that the content of alkali metal halides be 0.3wt% or less with respect to the amount of the quaternary ammonium alkyl phosphate.

Examples of quaternary ammonium alkyl phosphates of the present invention, as shown by the formula (I) or (II) above, include combinations of the following quaternary ammonium cations and phosphate anions. The quaternary ammonium cation may be trimethyloctyl ammonium cation; triethylstearyl ammonium cation;the cation of formula:-

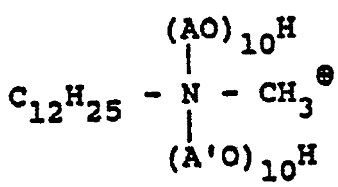

where AO and A'O are defined above; triethyl octanoic amidopropyl ammonium cation etc. The phosphate anion may be polyoxyethylene (3 mols) lauryl phosphate anion; polyoxyethylene (10 mols) stearyl phosphate anion; octyl phosphate anion; etc

Because of their characteristic chemical structures, the quaternary ammonium alkyl phosphates of the present invention cannot be produced advantageously from a practical point of view by any of the conventional methods. For example, a method is known of preventing alkali metal halides from being produced as byproducts as direct reaction between tertiary amines and lower alkyl triesters of phosphoric acid (Japanese Patent Tokko 45-573 and Tokkai 54-70223), but since triesters of phosphoric acids with

long-chain alkyl groups have low reactivity with tertiary amines, they are not practical for the production of quaternary-ammonium long-chain alkyl phosphates as in the present invention.

According to another conventional method, an alkali metal salt of a mono (long-chain) alkyl phosphate and/or alkali metal salt of a di(long-chain) alkyl phosphate is reacted with a mono(long-chain) alkyl tri(short-chain) alkyl ammonium halide by a salt exchange in water or in a solvent alcohol such as methanol, isopropanol, etc.

Quaternary ammonium alkyl phosphates are then separated by filtering off inorganic byproduct compounds such as alkali metal halides.

Although this conventional method is popular for the production and refining of so-called complex salts which are combinations of anion and cation active agents, it is not appropriate for keeping the content of inorganic byproducts to 1wt% or less because both the quaternary ammonium halide and the alkali metal salt of alkyl phosphate to be used contain long-chain alkyl groups and it is stoichiometrically difficult to carry out the salt-exchange reaction, for increasing their concentrations to relatively high levels in the range of 10-50wt% in water or alcohol-type solvent, which are required for industrial reasons. Accordingly, there will remain unused quaternary ammonium halides and alkali metal salts of alkyl phosphate and this makes it practically impossible to reduce the content of alkali metal halides to 1wt% or less with respect to quaternary ammonium alkyl phosphates.

Quaternary ammonium alkyl phosphates as defined above are produced according to this invention by the method described below.

First, a tertiary amine shown by the following formula (I) or (2) is quaternalized by alkyl halide (with analkyl group as defined by $R^2$ or $R^8$ of formula (I) or (II). Next, an alkali metal lower alcoholate is used, in the presence or in the absence of lower alcohol as a solvent, to exchange the halogen anions with lower alcoxy anions. Then the alkali metal halides generated as byproducts at this time are separated. Thereafter mono-or di-alkyl phosphate as shown by the following formula (3) is used to exchange the alcoxy anions;

(1) 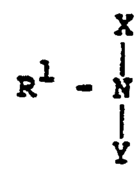

(2) 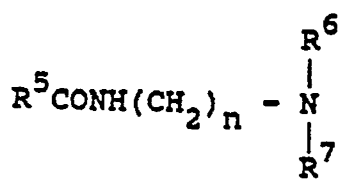

(3) 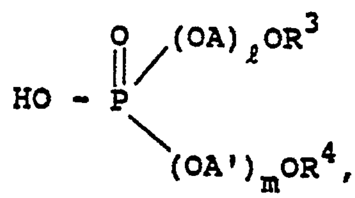

where $R^1$,$R^3$,$R^4$,$R^5$.$R^6$.$R^7$ X. Y, $\ell$, m and n are all as defined above.

Examples of alkali metal alcoholate which may be used here include sodium methoxide, sodium ethoxide and potassium isopropoxide.Sodium methoxide is industrially advantageous. Favourable results are obtained by the salt exchange reaction and the separation process thereafter, if lower alcohols such as methanol, ethanol and isopropanol are used as solvent. Thus, quaternary ammonium alkyl phosphates of the present invention may be mixtures of mono alkyl phosphates and diakyl phosphates of quaternary ammonium.

The quaternary ammonium alkyl phosphates of the present invention can be used singly as an antistatic component of a finishing oil for synthetic fibers but it is equally well to use them as a mixture with a conventional type of antistatic agent in an appropriate ratio.

The antistatic agents of this invention can be applied to synthetic fibers such as polyesters, polyacrylonitriles and polyamides or to mixtures of such synthetic fibres with natural and other synthetic fibers. The rate of application to such synthetic fibers (inclusive of mixed fibers) is generally 0.01-2wt% and preferably 0.01-05wt%. They may be applied to filaments, a tow or staple fibers by a kiss-roll method by

dipping or by spraying either during or after a spinning process.They may also be applied to fiber products.

In what follows, the present invention and its effects will be explained further in detail by way of examples and comparisons and it should be understood that these examples are not intended to limit the scope of this invention as defined in the appended claims.

Synthesis of quaternary ammonium alkyl phosphate of this invention (Example No. 1):

One mol of phosphoric anhydride was added to three mols of octyl alcohol over a period of one hour at 60-70°C while stirring. They were allowed to react with each other at 70°C for three hours and a mixture of mono and dioctyl phosphate was obtained. Separately, 0.5 mol of octyl dimethylamine and 200 mℓ of methanol were set inside an autoclave and after the interior gas was replaced by nitrogen, 0.5 molar equivalent of methyl chloride was introduced for a reaction of 60-70°C for three hours to obtain octyltrimethyl ammonium chloride. To this was gradually added 96g of 28% sodium methyl-methanol solution (0.5 molar equivalent as sodium methylate) for salt exchange and the by-product sodium chloride was filtered away to obtain as filtrate a methanol solution of octyltrimethyl ammonium methoxide. To this methanol solution was added 0.5 mol of the aforementioned mixture of mono and dioctyl phosphate and after methanol was distilled away, it was diluted with water to obtain 50wt% aqueous solution of octyltrimethyl ammonium octyl phosphate (Example No. 1).

Synthesis of quaternary ammonium alkyl phosphate of this invention (Example No. 5):

One mol of octyl alcohol and 0.2 weight part of potassium hydroxide as catalyst with respect to 100 weight part of octyl alcohol were set inside an autoclave and after the interior gas was replaced by nitrogen, 4 mols of ethylene oxide was introduced at 120-150°C over a period of two hours for a reaction at 150°C for one hour to obtain polyoxyethylene (4 mols) octylether. Next, 1 mol of phosphoric anhydride was added to 3 mols of this polyoxyethylene (4 mols) octylether thus obtained at 60-70°C over a period of one hour with stirring and they were allowed to react at 70°C for three additional hours to obtain a mixture of polyoxyethylene (4 mols) mono- and di-octyl phosphates. Separately, 1.1 mole of diethyl aminopropylamine and 1 mol of capric acid were set inside an autoclave for reaction at 120-150°C for eight hours while nitrogen gas was introduced and generated water was distilled out of the system at normal pressure to obtain diethyl octanoic amidopropylamine. Next, 1 mol of diethyl octanoic amidopropylamine thus obtained and 200 mℓ of isopropyl alcohol were set inside an autoclave for a reaction at 80-100°C for three hours after the interior gas was replaced by nitrogen gas and 1 molar equivalent of ethyl chloride was introduced to obtain triethyl octanoic amidopropyl ammonium chloride. To this was gradually added 193g of 28% sodium methylate-methanol solution (1 molar equivalent as sodium methylate) for salt exchange and the by-product sodium chloride was filtered away to obtain as filtrate an isopropyl alcohol/methanol solution of triethyl octanoic amidopropyl ammonium methoxide. One mol of the aforementioned mixture of polyoxyethylene (4 moles) mono- and di-octyl phosphates was added to this isopropyl alcohol/methanol solution and after isopropyl alcohol/methanol was distilled away, it was diluted with water to obtain 50wt% water solution of triethyloctylamidepropyl ammonium-polyoxyethylene (4 mols) octyl phosphate (Example No. 5).

Synthesis of quaternary ammonium alkyl phosphate of this invention (Example No. 10):

One mol of phosphoric anhydride was added to 3 mols of stearyl alcohol at 70-80°C over a period of one hour with stirring and they were allowed to react at 80°C for three additional hours to obtain a mixture of mono- and di-stearyl phosphates. Separately, 1 mol of stearyl amine and 0.5 weight part of potassium hydroxide as catalyst with respect to 100 weight part of stearyl amine were set inside an autoclave and after the interior gas was replaced by nitrogen, 30 mols of ethylene oxide was introduced at 100-160°C over a period of six hours for a reaction at 160°C for one hour to obtain polyoxyethylene (30 mols) stearyl amino-ether. To this was added next 530mℓ of isopropyl alcohol and after the interior gas was replaced by nitrogen again, 1 molar equivalent of methyl chloride was introduced for a reaction of 80-100°C for three hours to obtain the compound A shown as follows:

(A) 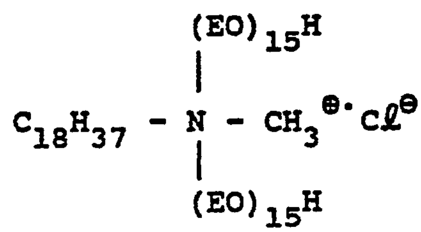

To this was gradually added 193 g of 28% sodium methylate-methanol solution (1 molar equivalent as sodium methylate) for salt exchange and the by-product sodium chloride was filtered away to obtain as filtrate an isopropyl alcohol/methanol solution of the compound B shown below:

(B) 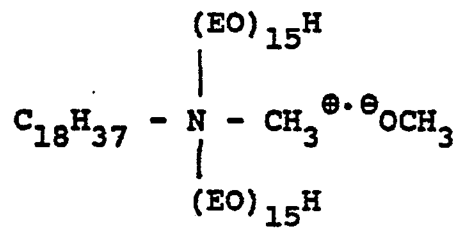

One mol of the aforementioned mixture of mono- and di-stearyl phosphates was added to this isopropyl alcohol/methanol solution and after isopropyl alcohol/methanol was distilled away, it was diluted with water to obtain 50wt% water solution of Example No. 10.

Other quaternary ammonium alkyl phosphates (exclusive of Comparison Example No. 12) were synthesized as follows.

<u>Syntheses of Examples Nos. 2-4, 6-9 and 10:</u>

Methods similar to those for Examples Nos. 1, 5 and 10 were respectively used.

<u>Syntheses of Comparison Examples Nos. 1-8:</u>

Methods similar to those for Examples Nos. 1, 5 and 10 were used.

<u>Comparison Examples 9-12:</u>

Conventionally available products were used.

<u>Synthesis of Comparison Example No 13:</u>

This was done by heating to dissolve 347.5g (1 mol) of stearyl trimethyl ammonium chloride and 334.7g (1 mol) of sodium sesqui stearyl phosphate in 2000mℓ of a mixed solvent of isopropyl alcohol/water = 95/5 (volume ratio). The solution was heated and stirred for one hour at 60°C and the deposited sodium chloride was filtered away by heating at 45-50°C. Isopropyl alcohol was distilled from the filtered solution thus obtained while heating under a reduced pressure and trimethyl stearyl ammonium stearyl phosphate with 80% of solid component was obtained.

<u>Synthesis of Comparison Example No. 14:</u>

This was done by heating to dissolve 347.5g (1 mol) of stearyl trimethyl ammonium chloride and 668g (1 molar equivalent) of 50% aqueous sodium sesqui stearyl phosphate in 2000mℓ of isopropyl alcohol and 1000mℓ of water and isopropyl alcohol was distilled away under azeotropy while the mixture was heated and stirred. Next, 1000mℓ of isopropyl alcohol was added to dilute the solution and sodium chloride which deposited at 35-40°C was filtered away. Isopropyl alcohol was distilled away by heating under a reduced pressure from the filtered solution which had been obtained and trimethyl stearyl ammonium stearyl phosphate with 80% of solid component was obtained.

<u>Synthesis of Comparison Example No. 15:</u>

This was obtained by a method similar to that for Comparison Example No. 13.

<u>Synthesis of Comparison Example No. 16:</u>

This was obtained by a method similar to that for Comparison Example No. 14.

Each of Examples and Comparison Examples shown below (except Comparison Example No. 12) is described as follows: (1) cation part (2) anion part (mixture of mono and di as in the case of aforementioned Example No. 1, except Comparison Examples Nos. 9-12), and (3) content of alkali metal halide (NaCl or KCl) with respect to effective components (weight percent, measured by the Volhard method except for Comparison Examples Nos. 9-12). POE, POP and EO respectively stand for polyoxyethylene, polyoxypropylene and oxyethylene.

Example No. 1: (1) trimethyl octyl ammonium, (2) octyl phosphate, (3) 0.18

Example No. 2: (1) trimethyl octyl ammonium, (2) stearyl phosphate, (3) 0.14
Example No. 3: (1) trimethylstearyl ammonium, (2) octyl phosphate, (3) 0.14
Example No. 4: (1) trimethylstearyl ammonium, (2) stearyl phosphate, (3) 0.10
Example No. 5: (1) triethyl octanoic amido propyl ammonium, (2) POE (4 mols) octyl phosphate, (3) 0.20
Example No. 6: (1) triethyl octanoic amido propyl ammonium, (2) POE (15 mols) stearyl phosphate, (3) 0.24
Example No. 7: (1) triethyl stearoic amido propyl ammonium, (2) POE (2 mols)/POP (1 mols) octyl phosphate, (3) 0.23
Example No. 8: (1) triethyl stearoic amido propyl ammonium, (2) POE (5 mols)/POP (1 mol) stearyl phosphate, (3) 0.24
Example No 9: (1)

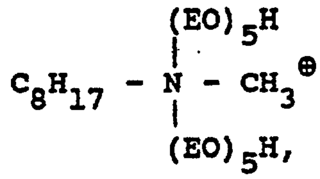

(2) octyl phosphate, (3) 0.63
Example No. 10: (1)

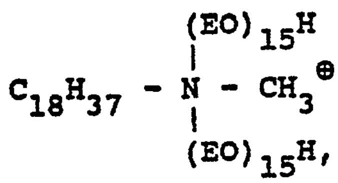

(2) stearyl phosphate, (3) 0.27
Example No. 11: (1) trimethyloctyl ammonium, (2) octyl phosphate, (3) 0.80
Comparison Example No. 1: (1) trimethylhexyl ammonium, (2) octyl phosphate, (3) 0.25
Comparison Example No. 2: (1) trimethylhexyl ammonium, (2) stearyl phosphate, (3) 0.20
Comparison Example No. 3: (1) trimethyloctyl ammonium, (2) butyl phosphate, (3) 0.34
Comparison Example No. 4: (1) triethyl butanoic amido propyl ammonium, (2) octyl phosphate, (3) 0.75
Comparison Example No. 5: (1) triethylbutanoic amido propyl ammonium, (2) stearyl phosphate, (3) 0.63
Comparison Example No. 6: (1) monomethyl dioctylbutanoic amido propyl ammonium, (2) butyl phosphate, (3) 0.01
Comparison Example No. B-7:

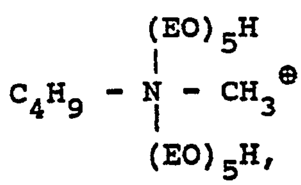

(2) octyl phosphate, (3) 0.83
Comparison Example No. 8:

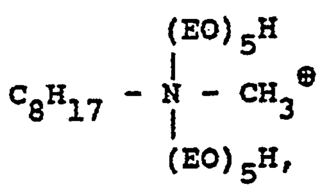

(2) butyl phosphate, (3) 0.72
Comparison Example No. 9: (1) trimethyloctyl ammonium, (2) chloride
Comparison Example No. 10: (1) triethyloctylamidpropyl ammonium, (2) methosulfate
Comparison Example No. 11:

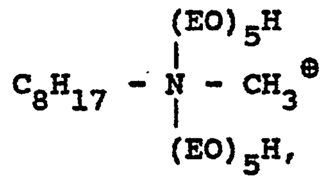

(2) nitrate

Comparison Example No. 12: (1) potassium (2) lauryl phosphate

Comparison Example No. 13: (1) trimethylstearyl ammonium, (2) stearyl phosphate, (3) 2.10

Comparison Example No. 14: (1) trimethylstearyl ammonium, (2) stearyl phosphate, (3) 1.43

Comparison Example No. 15: (1) trimethyloctyl ammonium, (2) octyl phosphate, (3) 2.47

Comparison Example No. 16: (1) trimethyloctyl ammonium, (2) octyl phosphate, (3) 1.71

Measurement of electrical resistance and evaluation of yellowing:

Staple fiber samples were prepared by applying 0.1% (effective weight percent) of each example and comparison example by a spray method to polyester staple fibers (1.54 dtex (1.4-denier), 38mm) and dried for one hour at 60°C. These samples were left for 24 hours under the conditions of 25°C and 40%RH or 25°C and 65%RH, and their electrical resistance was measured. They were also subjected to a heat treatment at 150°C for two hours and the degrees of their yellowing were observed and evaluated visually.

Measurement of electrostatic charge generated by friction:

Pieces of refined woven acrylic cloth were immersed in 0.2% (effective weight percent) water solution of each example and comparison example and then dried for one hour at 60°C. They were left for 24 hours under the conditions of 25°C and 40%RH and their static charges were measured by a rotary static tester.

Evaluation of deposit that fall off:

Staple fiber samples were prepared by applying 0.12% (effective weight percent) of each example and comparison example by a spray method to polyester staple fibers (1.54 dtex (1.4-denier), 38mm) and were left for 24 hours under the conditions of 30°C and 70%RH. These samples were used and 10kg of slivers manufactured by a carding engine was passed through a drawing frame. The deposits that fall off and become adhered to the trumpet to which the sliver is taken up were visually observed. Grades A through E were assigned in the increasing order of the amount of deposits, grade A being given if this amount is very small.

Evaluation of rusting:

After washed knitting needles were immersed in 2% (effective weight percent) water solutions of individual examples and comparison examples, they were left for 24 hours under the conditions of 20°C and 100%RH and the appearance of rust on each needle was visually observed and evaluated.

The results of the above are shown in Tables 1 and 2.

Table 1

| Ex. No. | Resistance (Ω) 25°C, 40% RH | 25°C, 65% RH | Static Charge (V) | Deposit | Yellowing | Rust |
|---|---|---|---|---|---|---|
| 1 | $1.2\times10^7$ | $8.8\times10^5$ | 100 | A | None | None |
| 2 | 4.3 | 16 | 200 | A | None | None |
| 3 | 5.7 | 33 | 170 | A | None | None |
| 4 | 8.5 | 53 | 450 | A | None | None |
| 5 | 3.2 | 13 | 180 | A | None | None |
| 6 | 6.5 | 45 | 250 | A | None | None |
| 7 | 6.3 | 43 | 210 | A | None | None |
| 8 | 8.8 | 74 | 470 | A | None | None |
| 9 | 1.3 | 9.0 | 100 | A | None | Slight |
| 10 | 3.3 | 21 | 120 | A | None | None |
| 11 | 1.5 | 8.5 | 100 | A | None | Slight |

Table 2

| Ex. No. | Resistance (Ω) 25°C, 40% RH | 25°C, 65% RH | Static Charge (V) | Deposit | Yellowing | Rust |
|---|---|---|---|---|---|---|
| 1 | $1.0\times10^7$ | $11\times10^5$ | 110 | E | Slight | None |
| 2 | 4.2 | 10 | 170 | D | None | None |
| 3 | 3.2 | 9.5 | 100 | E | Slight | None |
| 4 | 3.5 | 21 | 210 | E | None | None |
| 5 | 4.7 | 3.5 | 350 | D | None | None |
| 6 | 15 | 170 | 700 | D | None | None |
| 7 | 1.3 | 12 | 100 | E | None | None |
| 8 | 1.1 | 8.8 | 100 | E | None | None |
| 9 | 3.5 | 22 | 210 | D | Present | Great |
| 10 | 3.1 | 36 | 480 | E | Present | Great |
| 11 | 7.7 | 44 | 400 | E | Present | Great |
| 12 | 600 | 890 | 1400 | A | None | None |
| 13 | 8.3 | 61 | 430 | B | Present | Great |
| 14 | 8.4 | 59 | 400 | A | Slight | Great |
| 15 | 1.1 | 17 | 90 | E | Slight | Great |
| 16 | 4.0 | 15 | 360 | D | Slight | Great |

A comparison between Tables 1 and 2 and between Tables 5 and 6 clearly demonstrate that the finishing oils of the present invention described hereinabove exhibit superior antistatic characteristics both in high humidity and low humidity conditions and reduce the amount of deposits that fall off, yellowing by a heat treatment and generation of rust.

## Claims

1. A method of producing an antistatic agent for synthetic fibers characterised by comprising the steps of
quaternalizing a tertiary amine shown by the formula (1) or (2) below using an alkyl halide with 1–3 carbon atoms,
subsequently using an alkali metal alcoholates to exchange halogen anions for alkoxy anions,
separating the alkali metal halide generated as a byproduct, and
subsequently exchanging said alkoxy anions using mono-or di-alkyl phosphates as shown by the formula (3) below to thereby obtain a quaternary ammonium alkyl phosphate which is shown by the formula (I) or (II) and contains lwt% or less of said byproduct alkali metal halide, said quaternary ammonium alkyl phosphate serving as principal constituent of an antistatic agent for synthetic fibers; the formulae (1), (2) and (3) being as follows:

(1) 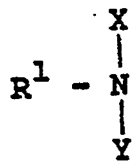

(2) 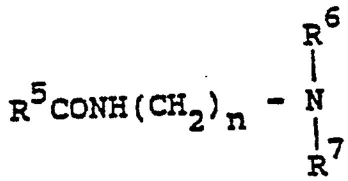

(3) 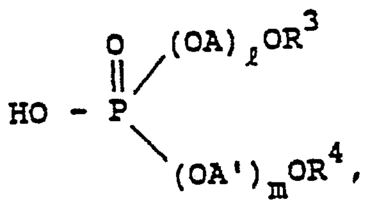

and the formulae (I) and (II) being as follows:

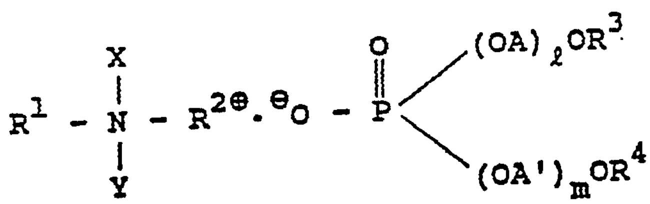 (I)

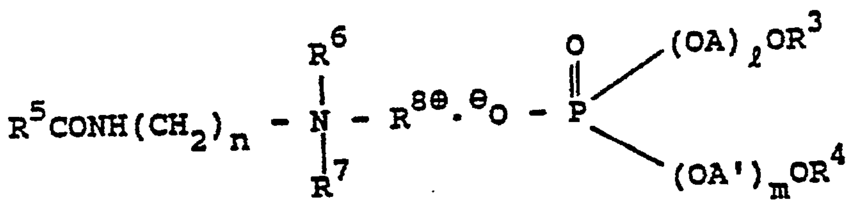 (II)

wherein:

$R^1$ and $R^3$ are the same or different alkyl groups or alkenyl groups in each case with from 8 to 18 carbon atoms;

$R^2$, $R^6$, $R^7$ and $R^8$ are the same or different alkyl groups within each case from 1 to 3 carbon atoms;

$R^4$ is hydrogen or an alkyl or alkenyl group with in each case from 8 to 18 carbon atoms;

$R^5$ is an alkyl or an alkenyl group with in each case 7 to 17 carbon atoms;

X is an alkyl group with from 1 to 3 carbon atoms or is a group of formula $-(AO)_qH$;

Y is an alkyl group with from 1 to 3 carbon atoms or is a group of formula $-(A'O)_rH$;

AO is equivalent to OA;

A'O is equivalent to OA';

OA and OA' are in each case chosen from a single oxyethylene group, a single polypropylene groups, or a chain of homopolymer, block copolymer or random copolymer type utilising as requisite one or both such groups;

q is an integer from 2 to 40;

r is an integer from 2 to 40;
q + r is an integer from 4 to 42;
l is zero or an integer from 1 to 20;
m is zero or an integer from 1 to 20;
l + m is zero or an integer from 1 to 20; and
n is 2 or 3

2. A method of producing an antistatic agent as claimed in claim 1 characterised by utilising comounds of Formulae (1) and (3) as starting materials to produce a compound of Formula (I) in which X, Y and $R^2$ are all methyl group; $R^1$ is an octyl group; $R^3$ is an octyl group; l and m are both zero; and $R^4$ is hydrogen or an octyl group: or comprising a mixture of the two compounds thereby defined.

3. A method of producing an antistatic agent as claimed in claim 1 characterised by utilising compounds of Formulae (1) and (3) as starting materials to produce either of, or a mixture of, the two compounds of Formula (I) in which: X, Y and $R^2$ are all methyl groups; $R^1$ is an octyl group; $R^3$ is a stearyl group; l and m are both zero; and $R^4$ is hydrogen or a stearyl group.

4. A method of producing an antistatic agent as claimed in claim 1 characterised by utilising compounds of Formulae (1) and (3) as starting materials to produce either of, or a mixture of, the two compounds of Formulae (I) in which: X, Y and $R^2$ are all methyl groups; $R^1$ is stearly group; $R^3$ is an octyl group: l and m are both zero; and $R^4$ is hydrogen or an octyl group.

5. A method of producing an antistatic agent as claimed in claim 1 characterised by utilising compounds of Formula (1) and (3) as starting meterials to produce either of, or a mixture of, the two compounds of Formula (I) in which: X, Y and $R^2$ are all methyl groups; $R^1$ is a stearyl group; $R^3$ is a stearyl group; l and m are both zero; and $R^4$ is hydrogen or a steary group.

6. A method of producing an antistatic agent as claimed in claim 1, characterised by utilising compounds of Formulae (2) and (3) as starting materials to produce either of, or a mixture of, the two compounds of Formula (II) in which: $R^6$, $R^7$, $R^8$ are ell ethyl groups; n = 3; $R^5$ is a heptyl group; OA and OA` are oxyethylene groups; l = 4; $R^3$ is an octyl group; and either m = 0 and $R^4$ is hydrogen or m = 4 and $R^4$ is an octyl group.

7. A method of producing an antistatic agent as claimed in claim 1, characterised by utilising compounds of Formulae (2) and (3) as starting materials to produce either of, or a mixture of, the two compounds of Formula (II) in which: $R^6$, $R^7$ and $R^8$ are all ethyl groups, n = 3; $R^5$ is a heptyl group; OA and OA` are oxyethylene groups; $\ell$= 15, $R^3$ is a stearyl group; and either m = 0 and $R^4$ is hydrogen or m = 15 and $R^4$ is a stearyl group.

8. A method of producing an antistatic agent as claimed in claim 1, characterisd by utilising compounds of Formulae (2) and (3) as starting materials to produce either of, or a mixture of, the two compounds of Formula (II) in which: $R^6$, $R^7$ and $R^8$ are all ethyl groups, n = 3; $R^5$ is a heptadecyl groups; OA and OA' are each oxyethylene/oxypropylene copolymer chains in a 2:1 number ratio respectively l = 3; $R^3$ is an octyl group; and either m = 0 and $R^4$ is hydrogen or m = 3 and $R^4$ is an octyl group.

9. A method of producing an antistatic agent as claimed in claim 1, characterised by utilising compounds of Formulae (2) and (3) as starting materials to produce either of, or a mixture of, the two compounds of Formula (II) in which: $R^6$, $R^7$ and $R^8$ are all ethyl groups; n = 3; $R^5$ is a heptadecyl groups; OA and OA' are each oxyehtylene/oxypropylene copolymer chains in a 5:1 number ration respectively, l = 6; $R^3$ is a stearyl group; and either m = 0 and $R^4$ is hydrogen or m = 6 and $R^4$ is a stearyl group.

10. A method of producing an antistatic agent as claimed in claim 1 characterised by utilising compounds of Formulae (1) and (3) as starting materials to produce either of, or a mixture of, the two compounds of Formula (I) in which: X and Y are both groups of formula $-(EO)_5$ where EO is an ethylene oxide chain unit; $R^2$ is a methyl group; $R^1$ is an octyl group; $R^3$ is an octyl group; l and m are both zero; and $R^4$ is hydrogen or an octyl group.

11. A method of producing an antistatic agent as claimed in claim 1 characterised by utilising compounds of Formulae (1) and (3) as starting materials to produce either of, or a mixture of, the two compounds of Formula (I) in which: X and Y are both groups of formula $-(EO)_{15}H$ where EO is an ehtylene oxide chain unti; $R^2$ is a methyl group; $R^1$ is a stearyl group; $R^3$ is a stearyl group; l and m are both zero; and $R^4$ is hydrogen or a stearyl group.

## Revendications

1. Procédé de préparation d'un agent antistatique pour fibres synthétiques, caractérisé en qu'il comprend les étapes consistant:
à quaternariser une amine tertiaire représentée par la formule (1) ou (2) ci-dessous, en utilisant un halogénure d'alkyle comportant de 1 à 3 atomes de carbone;
à utiliser ensuite un alcoolate de métal alcalin pour échanger les anions halogène contre des anions alkoxy;
à séparer l'halogénure de métal alcalin obtenu comme sous-produit; et
à échanger ensuite ces anions alkoxy, en utilisant un phosphate de mono- ou de dialkyle représenté par la formule (3) ci-dessous, de façon à obtenir un alkyl phosphate d'ammonium quaternaire représenté par

la formule (1) ou (2), contenant 1% en poids ou moins du sous-produit constitué par l'halogénure de métal alcalin, cet alkyl phosphate d'ammonium quaternaire formant le constituant principal d'un agent antistatique pour fibres synthétiques;
les formules (1), (2) et (3) étant les suivantes:

(1) 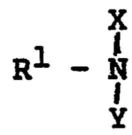

(2) 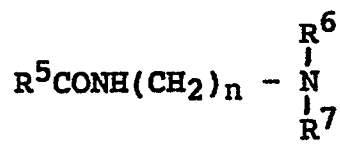

(3) 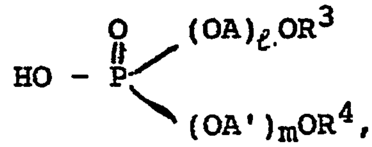

et les formules (I) et (II) étant les suivantes:

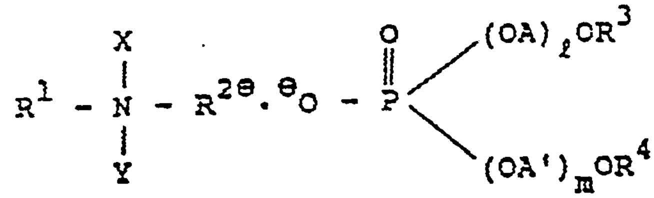 (I)

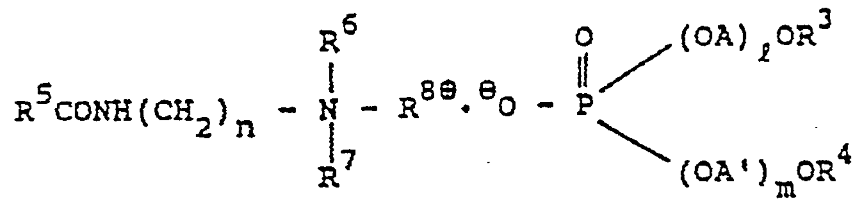 (II)

dans lesquelles:
$R^1$ et $R^3$ représentent des groupes alkyle ou alkényle identiques ou différents, comportant, dans chaque cas, de 8 à 18 atomes de carbone;
$R^2$, $R^6$, $R^7$ et $R^8$, représentent des groupes alkyle identiques ou différents, comportant, dans chaque cas, de 1 à 3 atomes de carbone;
$R^4$ représente un atome d'hydrogène, ou un groupe alkyle ou alkényle, comportant, dans chaque cas, de 8 à 18 atomes de carbone;
$R^5$ représente un groupe alkyle ou alkényle, comportant, dans chaque cas, de 7 à 17 atomes de carbone;
X représente un groupe alkyle comportant de 1 à 3 atomes de carbone, ou un groupe de formule $-(AO)_qH$;
Y représente un groupe alkyle comportant de 1 à 3 atomes de carbone, ou un groupe de formule $-(A'O)_rH$;
AO est équivalent à OA;
A'O est équivalent à OA';
les groupes OA et OA' sont choisis, dans chaque cas, parmi un groupe oxyéthylène simple, un groupe polypropylène simple, ou une chaîne d'un homopolymère, d'un copolymère séquencé ou d'un copolymère statistique à la condition d'utiliser un ou deux de ces groupes;
q représente un entier de 2 à 40;
r représente un entier de 2 à 40;
q + r représente un entier de 4 à 42;
l représente 0 ou un entier de 1 à 20;
m représente 0 ou un entier de 1 à 20;

l + m représente 0 ou un entier de 1 à 20; et
n est égal à 2 ou à 3.

2. Procédé de préparation d'un agent antistatique selon la revendication 1, caractérisé en ce qu'on utilise, comme produits de départ, des composés correspondant aux formules (1) et (3), pour préparer un composé de formule (I) dans laquelle X, Y et $R^2$ représentent tous des groupes méthyle; $R^1$ représente un groupe octyle; $R^3$ représente un groupe octyle; l et m sont tous les deux égaux à zéro; et $R^4$ représente un atome d'hydrogène ou un groupe octyle; ou comprenant un mélange des deux composés ainsi définis.

3. Procédé de préparation d'un agent antistatique selon la revendication 1, caractérisé en ce qu'on utilise, comme produits de départ, des composés correspondant aux formules (1) et (3), pour préparer l'un, ou un mélange, des deux composés de formule (I) dans laquelle les groupes X, Y et $R^2$ représentent tous des groupes méthyle; $R^1$ représente un groupe octyle; $R^3$ représente un groupe stéaryle; l et m sont tous les deux égaux à zéro; et $R^4$ représente un atome d'hydrogène ou un groupe stéaryle.

4. Procédé de préparation d'un agent antistatique selon la revendication 1, caractérisé en ce qu'on utilise, comme produits de départ, des composés correspondant aux formules (1) et (3), pour préparer l'un, ou un mélange, des deux composés de formule (I) dans laquelle les groupes X, Y et $R^2$ représentent tous des groupes méthyle; $R^1$ représente un groupe stéaryle; $R^3$ représente un groupe octyle; l et m sont tous les deux égaux à zéro; et $R^4$ représente un atome d'hydrogène ou un groupe octyle.

5. Procédé de préparation d'un agent antistatique selon la revendication 1, caractérisé en ce qu'on utilise, comme produits de départ, des composés correspondant aux formules (1) et (3), pour préparer l'un, ou un mélange, des deux composés de formule (I) dans laquelle les groupes X, Y et $R^2$ représentent tous des groupes méthyle; $R^1$ représente un groupe stéaryle; $R^3$ représente un groupe stéaryle; l et m sont tous les deux égaux à zéro; et $R^4$ représente un atome d'hydrogène ou un groupe stéaryle.

6. Procédé de préparation d'un agent antistatique selon la revendication 1, caractérisé en ce qu'on utilise, comme produits de départ, des composés correspondant aux formules (2) et (3), pour préparer l'un, ou un mélange, des deux composés de formule (II) dans laquelle les groupes $R^6$, $R^7$, $R^8$ représentent tous des groupes éthyle; n = 3; $R^5$ représente un groupe octyle; OA et OA' représentent des groupes oxyéthylène; l = 4; $R^3$ représente un groupe octyle; et soit m = 0 et $R^4$ représente un atome d'hydrogène, ou m = 4 et $R^4$ représente un groupe octyle.

7. Procédé de préparation d'un agent antistatique selon la revendication 1, caractérisé en ce qu'on utilise, comme produits de départ, des composés correspondant aux formules (2) et (3), pour préparer l'un, ou un mélange, des deux composés de formule (II) dans laquelle les groupes $R^6$, $R^7$ et $R^8$, représentent tous des groupes éthyle; n = 3; $R^5$ représente un groupe octyle; OA et OA' représentent des groupes oxyéthylène; l = 15; $R^3$ représente un groupe stéaryle; et soit m = 0 et $R^4$ représente un atome d'hydrogène, ou m = 15 et $R^4$ représente un groupe stéaryle.

8. Procédé de préparation d'un agent antistatique selon la revendication 1, caractérisé en ce qu'on utilise, comme produits de départ, des composés correspondant aux formules (2) et (3), pour produire l'un, ou un mélange, des deux composés de formule (II) dans laquelle les groupes $R^6$, $R^7$ et $R^8$ représentent tous des groupes éthyle; n = 3; $R^5$ représente un groupe stéaryle; OA et OA' représentent chacun une chaîne de copolymère oxyéthylène/oxypropylène selon un rapport en nombre respectif de 2:1; l = 3; $R^3$ représente un groupe octyle; et soit m = 0 et $R^4$ représente un atome d'hydrogène, ou m = 3 et $R^4$ représente un groupe octyle.

9. Procédé de préparation d'un agent antistatique selon la revendication 1, caractérisé en ce qu'on utilise, comme produits de départ, des composés correspondant aux formules (2) et (3), pour préparer l'un, ou un mélange, des deux composés de formule (II) dans laquelle les groupes $R^6$, $R^7$ et $R^8$ représentent tous des groupes éthyle; n = 3; $R^5$ représente un groupe stéaryle; OA et OA' représentent chacun une chaîne de copolymère oxyéthylène/oxypropylène selon un rapport en nombre respectif de 5:1; l = 6; $R^3$ représente un groupe stéaryle; et soit m = 0 et $R^4$ représente un atome d'hydrogène, ou m = 6 et $R^4$ représente un groupe stéaryle.

10. Procédé de préparation d'un agent antistatique selon la revendication 1, caractérisé en ce qu'on utilise, comme produits de départ, des composés correspondant aux formules (1) et (3), pour préparer l'un, ou un mélange, des deux composés de formule (I) dans laquelle les groupes X et Y représentent tous les deux des groupes de formule $-(EO)_5H$ dans laquelle EO représente un motif oxyde d'éthylène de chaîne; $R^2$ représente un groupe méthyle; $R^1$ représente un groupe octyle; $R^3$ représente un groupe octyle; l et m sont tous les deux égaux à zéro; et $R^4$ représente un atome d'hydrogène ou un groupe octyle.

11. Procédé de préparation d'un agent antistatique selon la revendication 1, caractérisé en ce qu'on utilise, comme produits de départ, des composés correspondant aux formules (1) et (3), pour préparer l'un, ou un mélange, des deux composés de formule (I) dans laquelle les groupes X et Y représentent tous les deux des groupes de formule $-(EO)_{15}H$ dans laquelle EO représente un motif oxyde d'éthylène de chaîne; $R^2$ représente un groupe méthyle; $R^1$ représente un groupe stéaryle; $R^3$ représente un groupe stéaryle; l et m sont tous les deux égaux à zéro; et $R^4$ représente un atome d'hydrogène ou un groupe stéaryle.

**Patentansprüche**

1. Verfahren zur Herstellung eines antistatischen Mittels für synthetische Fasern, gekennzeichnet durch die folgenden Stufen:
Quaternisieren eines tertiären Amins einer der nachfolgend gezeigten Formeln (1) oder (2) unter Verwendung eines Alkylhalogenids mit 1 bis 3 Kohlenstoffatomen;
anschliessendes Verwenden eines Alkalialkoholates unter Austausch von Halogenanionen durch Alkoxyanionen;
Abtrennen des als Nebenprodukt gebildeten Alkalihalogenids; und
anschliessendes Austauschen der Alkoxyanionen unter Verwendung von Mono- oder Dialkylphosphaten der nachfolgenden Formel (3) unter Erhalt eines quaternären Ammoniumalkylphosphates gemäss den Formeln (I) oder (II), welches 1 Gew.-% oder weniger an dem Alkalihalogenid als Nebenprodukt enthält, wobei das quaternäre Ammoniumalkylphosphat als Hauptbestandteil eines Antistatikums für synthetische Fasern dient;
wobei die Formeln (1), (2) und (3) wie folgt sind:

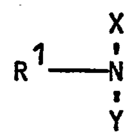

(1)

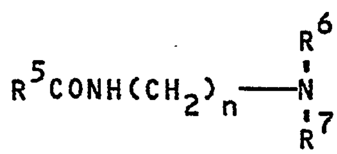

(2)

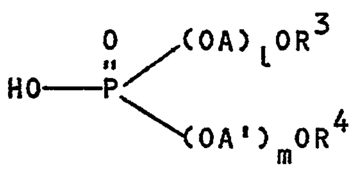

(3)

und die Formeln (I) und (II) wie folgt sind:

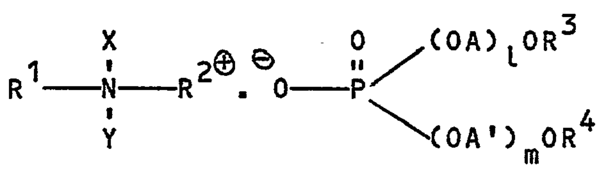

(I)

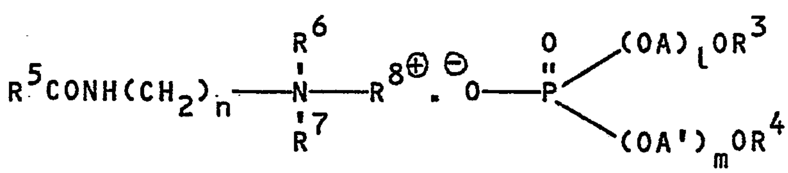

(II)

worin bedeuten:
$R^1$ und $R^3$ gleiche oder verschiedene Alkylgruppen oder Alkenylgruppen mit jeweils 8 bis 18 Kohlenstoffatomen;
$R^2$, $R^6$, $R^7$ und $R^8$ gleiche oder verschiedene Alkylgruppen mit jeweils 1 bis 3 Kohlenstoffatomen;
$R^4$ Wasserstoff oder eine Alkyl- oder Alkenylgruppe mit jeweils 8 bis 18 Kohlenstoffatomen;
$R^5$ eine Alkyl- oder Alkenylgruppe mit jeweils 7 bis 17 Kohlenstoffatomen;
X eine Alkylgruppe mit 1 bis 3 Kohlenstoffatomen oder eine Gruppe der Formel $-(AO)_qH$;
Y eine Alkylgruppe mit 1 bis 3 Kohlenstoffatomen oder eine Gruppe der Formel $-(A'O)_rH$;
AO ist äquivalent zu OA;
A'O ist äquivalent zu OA';

OA und OA' werden in allen Fällen ausgewählt aus einer einzelnen Oxyethylengruppe, einer einzelnen Polypropylengruppe oder einer Kette eines Homopolymers, Blockcopolymers oder statistischen Copolymers, bei denen eine oder beide solcher Gruppen zur Bildung erforderlich sind;
q eine ganze Zahl von 2 bis 40;
r eine ganze Zahl von 2 bis 40;
q + r eine ganze Zahl von 4 bis 42;
l 0 oder eine ganze Zahl von 1 bis 20;
m 0 oder eine ganze Zahl von 1 bis 20;
l + m 0 oder eine ganze Zahl von 1 bis 20; und
n 2 oder 3.

2. Verfahren zur Herstellung eines antistatischen Mittels gemäss Anspruch 1, dadurch gekennzeichnet, dass man Verbindungen der Formeln (1) und (3) als Ausgangsmaterialien verwendet zur Herstellung einer Verbindung der Formel (I), in welcher X, Y und $R^2$ alle Methylgruppe bedeutet, $R^1$ eine Octylgruppe ist; $R^3$ eine Octylgruppe ist; l und m beide Null sind; und $R^4$ Wasserstoff oder eine Octylgruppe ist: oder eine Mischung aus den beiden dadurch definierten Verbindungen umfasst.

3. Verfahren zur Herstellung eines antistatischen Mittels gemäss Anspruch 1, dadurch gekennzeichnet, dass man als Ausgangsmaterialien Verbindungen der Formeln (1) und (3) verwendet, um entweder eine oder eine Mischung der zwei Verbindungen der Formel (I) herzustellen, in welcher X, Y und $R^2$ alle Methylgruppen bedeuten; $R^1$ eine Octylgruppe ist; $R^3$ eine Stearylgruppe ist; l und m beide Null sind; und $R^4$ Wasserstoff oder eine Stearylgruppe ist.

4. Verfahren zur Herstellung eines antistatischen Mittels gemäss Anspruch 1, dadurch gekennzeichnet, dass man als Ausgangsverbindung Verbindungen der Formeln (1) und (3) verwendet, unter Ausbildung von einer oder einer Mischung von den zwei Verbindungen der Formel (I), in welcher X, Y und $R^2$ alle Methylgruppen sind; $R^1$ eine Stearylgruppe ist; $R^3$ eine Octylgruppe ist; l und m beide Null sind; und $R^4$ Wasserstoff oder eine Octylgruppe ist.

5. Verfahren zur Herstellung eines antistatischen Mittels gemäss Anspruch 1, dadurch gekennzeichnet, dass man als Ausgangsmaterialien die Verbindungen der Formeln (1) und (3) verwendet, unter Bildung einer oder einer Mischung von zwei Verbindungen der Formel (I), in welcher X, Y und $R^2$ alle Methylgruppe sind; $R^1$ eine Stearlygruppe ist; $R^3$ eine Stearylgruppe ist; l und m beide Null sind; und $R^4$ Wasserstoff oder eine Stearylgruppe ist.

6. Verfahren zur Herstellung eines antistatischen Mittels gemäss Anspruch 1, dadurch gekennzeichnet, dass man als Ausgangsmaterialien die Verbindungen der Formeln (2) und (3) verwendet, unter Ausbildung einer oder einer Mischung von zwei Verbindungen der Formel (II), in welcher $R^6$, $R^7$ und $R^8$ alle Ethylgruppen bedeuten; n 3 ist; $R^5$ eine Heptylgruppe ist; OA und OA' Oxyethylengruppen sind; l 4 ist; $R^3$ eine Octylgruppe ist; und entweder m Null und $R^4$ Wasserstoff oder m 4 und $R^4$ eine Octylgruppe sind.

7. Verfahren zur Herstellung eines antistatischen Mittels gemäss Anspruch 1, dadurch gekennzeichnet, dass man als Ausgangsmaterialien Verbindungen der Formeln (2) und (3) verwendet, unter Ausbildung einer oder einer Mischung von zwei Verbindungen der Formel (II) in welcher $R^6$, $R^7$ und $R^8$ alle Ethylgruppen sind; n 3 ist; $R^5$ eine Heptylgruppe ist; OA und OA' Oxyethylengruppen sind; l 15 ist, $R^3$ eine Stearylgruppe ist; und entweder m Null und $R^4$ Wasserstoff oder m 15 und $R^4$ eine Stearylgruppe sind.

8. Verfahren zur Herstellung eines antistatischen Mittels gemäss Anspruch 1, dadurch gekennzeichnet, dass man als Ausgangsmaterialien Verbindungen der Formeln (2) und (3) verwendet unter Ausbildung einer oder einer Mischung von zwei Verbindungen der Formel (II), in welcher $R^6$, $R^7$ und $R^8$ alle Ethylgruppen sind; n 3 ist, $R^5$ eine Heptadecylgruppe ist; OA und OA' jeweils eine Oxyethylen/Oxypropylen-Copolymerkette in einem jeweiligen Zahlenverhältnis von 2:1 sind; l 3 ist; $R^3$ eine Octylgruppe ist; und entweder m 0 und $R^4$ Wasserstoff oder m 3 und $R^4$ eine Octylgruppe sind.

9. Verfahren zur Herstellung eines antistatischen Mittels gemäss Anspruch 1, dadurch gekennzeichnet, dass man als Ausgangsmaterialien Verbindungen der Formeln (2) und (3) verwendet unter Ausbildung von einer oder einer Mischung von den zwei Verbindungen der Formel (II), in welcher $R^6$, $R^7$ und $R^8$ alle Ethylgruppen sind; n 3 ist; $R^5$ eine Heptadecylgruppe ist: OA und OA' jeweils Oxyethylen/Oxypropylen-Copolymerketten mit einem jeweiligen Zahlenverhältnis von 5:1 sind; l 6 ist; $R^3$ eine Stearylgruppe ist; und entweder m 0 und $R^4$ Wasserstoff oder m 6 und $R^4$ eine Stearylgruppe sind.

10. Verfahren zur Herstellung eines antistatischen Mittels gemäss Anspruch 1, dadurch gekennzeichnet, dass man als Ausgangsmaterialien Verbindungen der Formeln (1) oder (3) verwendet unter Ausbildung einer oder einer Mischung von zwei Verbindungen der Formel (I), in welcher X und Y beide Gruppen der Formel $-(EO)_5H$ sind, worin EO eine Ethylenoxid-Ketteneinheit bedeutet; $R^2$ eine Methylgruppe ist; $R^1$ eine Octylgruppe ist; $R^3$ eine Octylgruppe ist; l und m beide Null sind; und $R^4$ Wasserstoff oder eine Octylgruppe bedeutet.

11. Verfahren zur Herstellung eines antistatischen Mittels gemäss Anspruch 1, dadurch gekennzeichnet, dass man als Ausgangsmaterialien Verbindungen der Formeln (1) und (3) verwendet unter Ausbildung einer oder einer Mischung der zwei Verbindungen der Formel (I), in welcher X und Y beides Gruppen der Formel $-(EO)_{15}H$ sind, worin EO eine Ethylenoxid-Ketteneinheit ist; $R^2$ eine Methylgruppe ist, $R^1$ eine Stearylgruppe ist; $R^3$ eine Stearylgruppe ist; l und m beide Null sind und $R^4$ Wasserstoff oder eine Stearylgruppe ist.